# EUROPEAN PATENT APPLICATION

(11) **EP 3 608 551 A1**
(43) Date of publication of application: **12.02.2020**
(21) Application number: 19186544.3
(22) Date of filing: 16.07.2019
(51) Int. Cl.: F16B 37/04, F16B 33/00, E05D 5/02, F16B 5/06

(54) **CLAMPING ANCHOR FOR FASTENING IRONWORK TO A HOLLOW PROFILE OF A WINDOW OR DOOR**

(30) Priority: 09.08.2018 BE 201805559
(71) Applicant: Van Parys, Emmanuel, 9790 Wortegem-Petegem (BE)
(72) Inventor: Van Parys, Emmanuel, 9790 Wortegem-Petegem (BE)
(74) Representative: Donné, Eddy

(57) **Abstract**

The invention relates to a clamping anchor (1) for fastening ironwork (4) to a hollow profile (2) of a window or door, whereby the clamping anchor essentially consists of an L-shaped body (6) with a first leg (7) and a second leg (8), whereby the first leg (7) is short in proportion to the second leg (8), the second leg (8) of which is provided with an internal thread (9) for securing the clamping anchor via a screw (5), which internal threads (9) extends lengthways of the second leg (8), whereby the first leg is provided with a clamping surface (21) for an internal wall surface (13) of the profile, characterised in that at the free end (10) of the second leg, a supporting surface (15) is provided for the ironwork, whereby the clamping surface and the supporting surface are located at both sides of the thread (9) of the second leg, whereby a stable balance of forces is created on the clamping anchor when tightening the screw. The invention also relates to a method for fastening ironwork to a hollow profile of a window or door by means of said clamping anchor.

## Description

The present invention relates to a clamping anchor for fastening ironwork to a hollow profile of a window or door, in particular for fastening a hinge to a window or door.

In the event of windows and doors composed of hollow profiles made of aluminium or the like, the hinges are currently fastened to a hollow profile by means of bolts that are inserted into a wall of the profile through drilled openings and are tightened in a tensile part with screw holes that are positioned opposite the openings in the wall of the profile.

Such a tensile part is formed, for example, by a plate that is slid into the hollow space of the profile until the screw holes are opposite the drilled holes in the profile, whereby while moving the plate is pressed against the inside of said wall by means of a leaf spring or the like.

Such mounting requires a certain amount of time and skill on the part of the mechanic, especially when the hinges have to be fastened at a large distance from the ends of the profile.

A disadvantage is also that the tensile parts and the openings in the profile have to be provided in advance when assembling the profiles into a window or door and that these tensile parts can no longer be replaced after assembly.

Another disadvantage is that such tensile parts are relatively bulky and therefore take up a lot of storage space and that the tensile part has to be adapted to the internal shape of the relevant profile to which it has to be fastened and therefore a relatively large number of types of such tensile parts exist and have to be in stock.

Other fastening types are already known in the form of a clamping system which can be inserted into an opening in a wall of a profile of a window or door and which can be anchored by means of a movable component with which the clamping system can be tightened behind a roll-in tooth of the profile.

Such clamping system is relatively complex in terms of construction such that the cost is relatively high.

To ensure a stable fastening, such a clamping system must find sufficient counter-support on the opposite side of the roll-in tooth, for example against an additional wall of the profile or in a second opening in an opposite wall of the profile, in a drilled hole or the like.

Consequently, such clamping system is not applicable in any given profile if a stable fastening is required.

The applicant's EP2248975 describes a clamping system via a hook-shaped or L-shaped channel nut with a first leg and a second leg, the second leg of which is provided with an internal thread extending in the longitudinal direction of this leg and a widened head on the top end of this leg, whereby the channel nut can be inserted completely through an opening in a wall of the profile up to the widened head and whereby the length of the second leg is such that when the channel nut is inserted into the profile up to the widened head, the first leg can be hooked behind a first internal wall surface of the profile and can be clamped to it by means of the tensile force of a bolt which is twisted into the thread.

The channel nut of EP2248975 contains two clamping surfaces, a first (flat part 15) on the first leg and a second (shoulder 18) on the second leg. The flat part 15 leans against the wall surface 13. The shoulder 18 is placed at least partially under the internal wall surface 19. When the screw is tightened, the clamping anchor will tighten, more specifically on the level of the first and the second internal wall surface 13 respectively 19.
This results in a stable fastening.

A disadvantage is that the clamping anchor needs to be clamped via two internal wall surfaces 13, 19 of the profile for a stable fastening.

Another disadvantage is that the form of the channel nut is rather complex. The two clamping surfaces must be correctly positioned for a stable fastening. The production process must be able to handle the complex form. The material of the channel nut must also be strong enough.

DE 101 13 667 describes a profiled strip with a groove into which a sliding block can be inserted and is stably clamped by a tight fit. The profile strip is intended to be fastened to a wall or a machine. The sliding block is clamped into the groove by hand and can be removed manually by swivelling it out of the profile strip, for example to be plugged into the profile strip at a different place. Such a sliding block cannot be clamped stably in a hollow profile.

The purpose of the present invention is to provide a solution to one or more of said and other disadvantages.

To this end, the invention relates to a clamping anchor for fastening ironwork to a hollow profile of a window or door, whereby the clamping anchor essentially consists of an L-shaped body with a first leg and a second leg, whereby the first leg is short in proportion to the second leg, the second leg of which is provided with an internal thread for securing the clamping anchor via a screw, which extends lengthways of this leg, whereby the first leg is provided with a clamping surface for an internal wall surface of the profile, characterised in that at the free end of the second leg, a supporting surface is provided for the ironwork, whereby the clamping surface and the supporting surface are located at both sides of the thread of the second leg, whereby a stable balance of forces is created on the clamping anchor when tightening the screw.

The shape and dimensions of the clamping anchor are such that the body, starting with the side of the first leg, can be inserted completely through an opening in a wall of the profile and whereby the length of the second leg is such that when the body is inserted in the profile, the first leg of the clamping anchor can be hooked behind an internal wall surface of the profile and clamped securely to it via a clamping surface by means of the tensile strength of a screw screwed in said thread, whereby at the free end of the second leg a supporting surface is provided against which the ironwork can support, such that when tightening the screw a balance of forces is created with the clamped first leg.

A special advantage is that there is only one clamping surface, i.e. when clamping the first leg. The supporting surface of the clamping anchor with the hinge creates a stable balance of forces on the clamping anchor.

Another advantage is the quick and simple, more intuitive mounting that resembles the turning of a bolt, i.e. a (large) rotation followed by a (small) translation.

Yet another advantage is that the clamping anchor is slightly longer and therefore easier to handle by the mechanics.

The shape is also more favourable and can therefore be produced using a simpler production process. The shape has a larger section such that the clamping anchor can be made of a cheaper material.

Furthermore, the clamping anchor can very easily be inserted into a drilled opening of a door or window profile, whereby the thread of the clamping anchor can serve as a thread for a bolt with which, for example, a hinge can be screwed to said wall of the profile and whereby this screw also serves to tighten the clamping anchor against the internal wall surface of the profile. This saves time during mounting.

Furthermore, the clamping anchor is very compact, such that only little storage area is needed.

An advantage is that the clamping anchor does not necessarily have to be inserted into the profiles in advance when assembling the frames of the window or door, and such clamping anchors according to the invention can also be provided later and can be easily removed or replaced later.

Additional clamping anchors according to the invention can be provided at any place in the profile, since somewhere in each profile there is an internal wall surface behind which the clamping anchor can be hooked, even if it is only the internal wall surface of the wall with the opening for the insertion of the clamping anchor.

The opening can be a drilled or milled opening, round or not round. Preferably, the opening in the wall of the profile is round.

In a preferred embodiment of a clamping anchor according to the invention, the second leg at its free end is provided with a widening that serves as said supporting surface, the widening being on the opposite side of the first leg as seen longitudinally.

The clamping surface on the first leg and the supporting surface on the second leg together create a balanced torque when clamping the clamping anchor.

In another preferred embodiment of a clamping anchor according to the invention, the distance of the internal axial thread to the clamping surface of the first leg and of the internal axial thread to the supporting surface of the free end of the second leg is practically the same.

This creates a stable balance of forces on tightening by the screw. As also shown in the figures, "the distance to" should be seen as the distance to the middle of the clamping and supporting surface in question.

In another preferred embodiment of a clamping anchor according to the invention, the distance between the supporting surface of the first leg and the screw is as small as possible and the distance between the supporting surface of the free end of the second leg (that leans against the hinge leaf) and the screw is as big as possible.

In yet another preferred embodiment of a clamping anchor according to the invention, the downward reaction force of, on the one hand, the profile on the clamping surface of the first leg and, on the other hand, the hinge leaf on the supporting surface of the free end of the second leg is equal to the upward pulling force and preload force of the screw.

In a mounted condition whereby the ironwork is secured to the clamping anchor by means of a screw, the downward reaction force of the profile on the clamping surface of the first leg, on the one hand, and the ironwork on the supporting surface of the second leg, on the other hand, is equal to the upward pulling force of the screw, as seen in the plane of the window or door to which the ironwork is mounted.

To this end the clamping anchor has a specific form whereby a supporting surface/clamping surface is located on both sides of the thread developing a balanced torque force when clamping. On one side of the thread, i.e. at the bottom of the second leg, the first leg is located which is provided with a clamping surface on which a downward force is applied. On the opposite side of the thread, more specifically at the top of the second leg, the supporting surface is located on the free end of the second leg on which a downward force is applied when a screw is clamped in the thread. The upward pulling force of the screw is compensated by the downward torque to the left and right of the screw, in a plane located in the plane of the window or door to which the ironwork is mounted.

In a preferred embodiment of a clamping anchor according to the invention, the length of the second leg, more specifically the perpendicular distance between the end of the second leg and the first leg, is equal to or slightly greater than the perpendicular distance between said internal wall surface and the wall of the profile in which said opening has been made.

In a preferred embodiment of a clamping anchor according to the invention, the general shape of the body is oblong-shaped like that of a bolt and the first leg is (very) short in relation to the second leg.

The clamping anchor has practically the shape of a bolt, such that mounting is very intuitive and resembles the turning of a bolt.

In a preferred embodiment of a clamping anchor according to the invention, the shape and dimensions of the clamping anchor are such that the body can be inserted practically vertically through an opening in a wall of the profile, whereby the transverse diameter of the underside of the clamping anchor is practically the same as the transverse diameter of the opening.

In a preferred embodiment of a clamping anchor according to the invention, the transverse diameter of the second leg on the level of the first leg, including the length of the protruding part of the first leg, is practically the same as the transverse diameter of the opening.

The transverse diameter of the underside of the clamping anchor is that of the underside of the second leg including the length of the first leg.

Preferably, the body, by its specific shape, is lifted slightly slantways, when inserting it through the opening, without there being any tilting movement.

In a specific embodiment of a clamping anchor according to the invention, the second leg is essentially cylindrical on the inside above the first leg and the second leg extends conically to its free end on the opposite outside.

A widening is located on this conically extending free end of the second leg which serves as a supporting surface.

At the free end of the conical extension of the second leg, the supporting surface for the hinge leaf is provided as a counterpart to the clamping surface on the first leg. The conical shape is still simple and allows the clamping anchor to be operated intuitively as a bolt.

In a certain embodiment of a clamping anchor according to the invention, the second leg has a practically cylindrical part on the side of the widening over a certain distance of the free end against which the wall of the profile can lean. This prevents the clamping anchor from falling through the opening.

In a specific embodiment of a clamping anchor according to the invention, the clamping anchor cannot fall through the opening.

In a preferred embodiment of a clamping anchor according to the invention, the angle between the first leg and the second leg forms a straight angle.

In another preferred embodiment of a clamping anchor according to the invention, the clamping anchor is made from one piece. The simple shape of the clamping anchor means the production is also simple and inexpensive.

The clamping anchor can be easily mounted in place. The clamping anchor is inserted through the opening in the profile with the first leg first by means of a translation movement. Then the first leg is hooked behind an internal wall surface of the profile by means of a rotational movement.

In a preferred embodiment of a clamping anchor according to the invention, the clamping anchor can be mounted from the outside of a profile through an opening in a wall of the profile, as well as dismantled, and the clamping anchor can be re-used after dismantling.

The invention also relates to a method for fastening ironwork to a hollow profile of a window or door by means of a clamping anchor according to any one of the previous claims, whereby:
a) the clamping anchor is inserted through the opening in the profile with the first leg and subsequently lowered almost vertically with the second leg;
b) the first leg is hooked behind an internal wall surface of the profile;
c) the ironwork is placed over the clamping anchor on the wall whereby the ironwork supports on the free end of the second leg via the supporting surface and whereby a fastening hole is aligned in the ironwork opposite the clamping anchor;
d) a screw is inserted through the fastening hole and screwed into the thread of the clamping anchor, so that the clamping anchor tightens against an internal wall surface of the profile on the level of the clamping surface with the first leg and against the ironwork on the level of the supporting surface with the second leg.

The body is lifted slightly slantways when inserting it through the opening.

With the intention of better showing the characteristics of the invention, a preferred embodiment is described hereinafter, by way of an example without any limiting nature, with reference to the accompanying drawings wherein:
figure 1 schematically shows a clamping anchor according to the invention;
figure 2 schematically shows a cross-section of a hinge that is secured with a clamping anchor according to the invention.

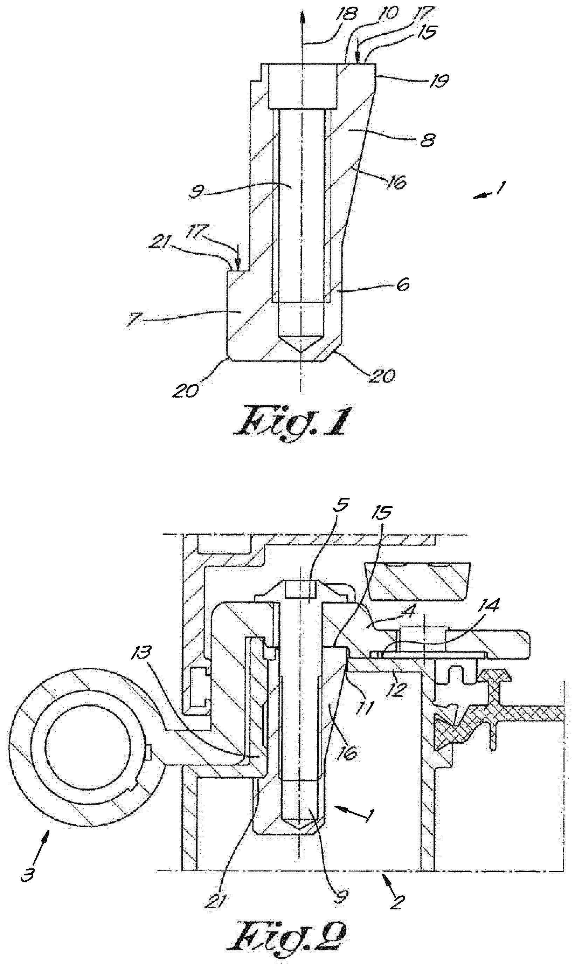

Figure 2 shows a part of a hinge 3, one hinge leaf 4 of which is fastened on a hollow profile 2 by means of a clamping anchor 1 according to the invention.

As shown in more detail in figure 1, the clamping anchor 1 essentially consists of an L-shaped body 6 with a first leg 7 and a second leg 8, the second leg 8 of which is provided with an internal thread 9 which extends lengthways of this leg 8.

The clamping anchor 1 is oblong-shaped with a long leg (second leg 8) and a short leg (first leg 7).

A supporting surface 15 is located on the free end 10 of the second leg 8 that leans against the hinge leaf 4 when clamping the screw 5.

This supporting surface 15 can be provided at the head of the free end 10 of the second leg 8, as shown in the figure, but the free end 10 may also be shaped in such a way that the supporting surface is not completely on the top end but slightly lowered so that the hinge leaf 4 can still lean against this supporting surface.

The free end 10 is made wider on one side, i.e. conical (as seen in a lateral view) on the side of the second leg 8 opposite the side where the first leg 7 is located. Consequently, torque can be created.

The shape and dimensions of the clamping anchor 1 are such that the body 6, starting with the first leg 7, can be inserted completely through an opening 11, in this example a round opening, into a wall 12 of the profile 2 and whereby the length of the second leg 8 is such that when the body 6 is inserted into the profile 2, the clamping anchor 1 can be hooked with the first leg 7 behind a first internal wall surface 13 of the profile 2 in which the internal wall surface 13 is located in a reinforced zone of the profile 2.

The length of the second leg 8, more specifically the perpendicular distance between the free end 10 and the first leg 7, is preferably equal to or slightly greater than the perpendicular distance between said internal wall surface 13 and the external wall surface 14 of the profile wall 12 in which said opening 11 has been made.

The end of the clamping anchor 1 toward the first leg 7 (the outer corners of the body 6) has bevelled edges 20 for easier insertion through the opening 11

In the example shown in figure 2, the clamping anchor 1 has an oblong, conical cylindrical shape. In this way the clamping anchor 1 can be easily inserted through said opening 11 in the profile 2 by means of a translation movement. Inserted at its deepest point, the first leg 7 of the clamping anchor 1 can be clamped into the internal wall surface 13 by means of a small rotational movement.

The first leg 7 is cylindrical and is very short compared to the second leg 8. The second leg 8 is essentially cylindrical with a conical widening 16 toward the free end 10. At the largest diameter of the conical widening 16 (at the head of the free end of the second leg), the head serves as a supporting surface 15 with the hinge.

The clamping anchor 1 is made in one piece.

Figure 1 shows a cross-section of the clamping anchor 1 with internal thread 9. Figure 2 shows a cross-section whereby the clamping anchor 1 is secured with a screw 5.

The use of a clamping anchor 1 according to the invention for fastening a hinge leaf 4 on a wall 12 of a hollow profile 2 is simple and as follows.

First an opening 11 is drilled in the wall 12 with a diameter that is slightly bigger than the bottom diameter of the second leg 8, added to the length of the protruding part of the first leg 7.
Subsequently the clamping anchor 1 is inserted into the opening 11 with its first leg 7 lifted slightly slantways and then practically vertically lowered with the second leg 8 until the first leg 7 hooks behind the wall surface 13.

The hinge leaf 4 is then placed over the clamping anchor 1 on the wall 12, whereby a fastening hole 22 is aligned in the hinge leaf 4 opposite the clamping anchor 1. The hinge leaf 4 then supports on the free end 10 of the second leg 8 via the supporting surface 15.

A screw 5 is then inserted through the fastening hole 22 and the screw 5 is tightened in the thread 9 of the clamping anchor 1.

The screw 5 is then tightened, such that the clamping anchor 1 tightens against the profile 2, more specifically on the level of the clamping surface 21 with the first leg 7 and the supporting surface 15 with the second leg 8. The reaction force of tightening the screw 5 forms a balanced torque between on the one hand, the profile wall 12 and the first leg 7 and on the other hand the hinge leaf 4 and the second leg 8.

Because these surfaces 13/21 and 19/15 are located on either side of the second leg 8, a stable fastening is obtained.

The upward pulling force of the screw 5 is compensated by the downward torque 17 to the left and right of the screw, in a plane located in the plane of the window or door to which the hinge leaf 4 is mounted.

The present invention is by no means limited to the embodiments described as an example and shown in the drawings, but a clamping anchor according to the invention as defined by the claims can be realised according to all kinds of variants without departing from the scope of the invention.

## Claims

1. Clamping anchor (1) for fastening ironwork (4) to a hollow profile (2) of a window or door, whereby the clamping anchor essentially consists of an L-shaped body (6) with a first leg (7) and a second leg (8), whereby the first leg (7) is short in proportion to the second leg (8), the second leg (8) of which is provided with an internal thread (9) for securing the clamping anchor via a screw (5), which extends lengthways of this leg (8), whereby the first leg (7) is provided with a clamping surface (21) for an internal wall surface (13) of the profile (2), **characterised in that** at the free end (10) of the second leg (8), a supporting surface (15) is provided for the ironwork (4), whereby the clamping surface (21) and the supporting surface (15) are located on either side of the thread (9) of the second leg (8), whereby a stable balance of forces is created on the clamping anchor (1) when tightening the screw (5).

2. Clamping anchor (1) according to claim 1, **characterised in that** the transverse diameter of the second leg (8) on the level of the first leg (7) including the length of the protruding part of the first leg (7) is practically the same as the transverse diameter of the opening (11).

3. Clamping anchor (1) according to claim 1, **characterised in that** the second leg (8) is provided on its free end (10) with a widening (16) that serves as said supporting surface (15), whereby the widening (16) is located, as seen in the longitudinal section, on the opposite side of the first leg (7) .

4. Clamping anchor (1) according to any one of the previous claims, **characterised in that**, in a mounted condition whereby the ironwork (4) is secured to the clamping anchor (1) by means of a screw (5), the downward reaction force (17) of the profile (2) on the clamping surface (21) of the first leg (7), on the one hand, and the ironwork (4) on the supporting surface (15) of the second leg (8), on the other hand, is equal to the upward pulling force (18) of the screw (5), as seen in the plane of the window or door to which the ironwork (4) is mounted.

5. Clamping anchor (1) according to any one of the previous claims, **characterised in that** the length of the second leg (8), more specifically the perpendicular distance between the end of the second leg (8) and the first leg (7), is equal to or slightly greater than the perpendicular distance between said internal wall surface (13) and the wall (12) of the profile (2) in which said opening (11) has been made.

6. Clamping anchor (1) according to any one of the previous claims, **characterised in that** the general shape of the body (6) is oblong-shaped like that of a bolt.

7. Clamping anchor (1) according to any one of the previous claims, **characterised in that** the opening (11) in the wall (12) of the profile (2) is round.

8. Clamping anchor (1) according to any one of the previous claims, **characterised in that** the shape of the second leg (8) is essentially cylindrical on the inside above the first leg (7) and extends conically to its free end (10) on the opposite outside.

9. Clamping anchor (1) according to claim 9, **characterised in that** the widening (16) is located on the conically extending free end (10) of the second leg (8).

10. Clamping anchor (1) according to any one of the previous claims, **characterised in that** the second leg (8) has a practically cylindrical part (19) on the side of the widening (16) over a certain distance from the free end (10) against which the wall (12) of the profile (2) can lean.

11. Clamping anchor (1) according to any one of the previous claims, **characterised in that** the angle between the first leg (7) and the second leg (8) forms a straight angle.

12. Clamping anchor (1) according to any one of the previous claims, **characterised in that** the clamping anchor is made in one piece

13. Clamping anchor (1) according to any one of the previous claims, **characterised in that** the clamping anchor cannot fall through the opening (11).

14. Method for fastening ironwork (4) to a hollow profile (2) of a window or door by means of a clamping anchor (1) according to any one of the previous claims, **characterised in that**
a) the clamping anchor (1) is inserted through the opening (11) in the profile (2) with the first leg (7) and subsequently lowered almost vertically with the second leg (8) ;
b) the first leg (7) is hooked behind an internal wall surface (13) of the profile (2);
c) the ironwork (4) is placed over the clamping anchor (1) on the wall (12) whereby the ironwork (4) supports on the free end (10) of the second leg (8) via the supporting surface (15) and whereby a fastening hole (22) is aligned in the ironwork (4) opposite the clamping anchor (1);
d) a screw (5) is inserted through the fastening hole (22) and screwed into the thread (9) of the clamping anchor (1), such that the clamping anchor (1) tightens against an internal wall surface (13) of the profile (2) on the level of the clamping surface (21) with the first leg (7) and against the ironwork (4) on the level of the supporting surface (15) with the second leg (8).

15. Clamping anchor (1) according to claim 12, **characterised in that** the body (6) is lifted slightly slantways when inserting it through the opening (11).
